# EUROPÄISCHE PATENTSCHRIFT

(11) **EP 3 623 210 B1**
(45) Veröffentlichungstag und Bekanntmachung des Hinweises auf die Patenterteilung: **05.04.2023**
(21) Anmeldenummer: 19196558.1
(22) Anmeldetag: 10.09.2019
(51) Int. Cl.: B60N 2/50, B60N 2/52

(54) **FAHRZEUGSITZ**
VEHICLE SEAT
SIÈGE DE VÉHICULE

(30) Priorität: 11.09.2018 DE 102018122083
(43) Veröffentlichungstag der Anmeldung: 18.03.2020
(73) Patentinhaber: GRAMMER AG, 92289 Ursensollen (DE)
(72) Erfinder: Fillep, Johannes, 92262 Birgland (DE); Schanderl, Florian, 92521 Schwarzenfeld (DE)
(74) Vertreter: Hannke, Christian

(56) Entgegenhaltungen:
- DE-A1-102010 046 799
- DE-C1- 4 335 199
- US-A- 4 213 594

## Beschreibung

Die vorliegende Erfindung betrifft einen Fahrzeugsitz sowie ein Verfahren zur, insbesondere vollautomatischen, Höheneinstellung eines Fahrzeugsitzes gemäß den jeweiligen Oberbegriffen der Patentansprüche 1 und 8.

Das Dokument zeigt DE4335199C1 einen Fahrzeugsitz, mit einem Sitzteil zum Platznehmen eines Benutzers des Fahrzeugsitz, mit einem Sitzfuß zur Montage des Fahrzeugsitzes auf einem Fahrzeugboden, einem höhenverstellbaren Verbindungsgestell, welches das Sitzteil mit dem Sitzfuß mechanisch miteinander verbindet, sodass das Sitzteil in Höhenrichtung gegenüber dem Sitzfuß bewegbar ist, wobei zumindest eine Einstelleinrichtung zum Einstellen und Begrenzen einer Sitzhöhe des Sitzteils während einer Sitzbelastung des Sitzteils durch den Benutzer erfolgt. Auch ein entsprechendes Verfahren ist im Dokument gezeigt.

Ein Fahrzeugsitz weist üblicherweise zumindest einen Sitzfuß sowie eine relativ in vertikaler Richtung zu dem Sitzfuß bewegliche Sitzfläche auf, sodass während einer Fahrzeugbewegung und während einer Belegung der Sitzfläche mit einem Benutzer diese gegen den Sitzfuß einfedern kann.

Ein maßgeblicher Fokus bei der Entwicklung solcher Fahrzeugsitze liegt auch darauf, für ein möglichst breites Spektrum an zu benutzenden Personen stets eine passende Sitzdämpfung anbieten zu können. Dies führte bisher im Stand der Technik zu solchen Fahrzeugsitzen, die bei unterschiedlichen Benutzern unterschiedlichen Gewichts, jeweils in aufwändiger Art und Weise zum Beispiel mittels Schaltern oder sonstigen Verstellmaßnahmen, an einem Dämpfungselement zwischen dem Sitzfuß und der Sitzfläche den Anforderungen an einen idealen Dämpfungsbereich und einer idealen, zum Beispiel gewünschten Sitzhöhe, gerecht wurden. Diese Einstellverfahren sind jedoch sehr aufwendig und oft ungenau.

Demnach ist es unter anderem eine Aufgabe der vorliegenden Erfindung, einen Fahrzeugsitz anzugeben, bei welchem in besonders einfacher und kostengünstiger Art und Weise eine, insbesondere vollautomatische, Anpassung einer Sitzhöhe des Sitzteils relativ zu dem Sitzfuß und/oder ein Dämpfungsgrad des Sitzteils gegenüber dem Sitzfuß während einer Sitzbelegung einstellbar ist. Die Einstellung des Dämpfungsgrades kann insbesondere mit der Einstellung einer Dämpfungshärte eines zwischen dem Sitzfuß und der Sitzfläche angeordneten Dämpfungselements auf ein bestimmtes Benutzergewicht einhergehen (= Gewichtseinstellung).

Die oben genannte Aufgabe wird durch den Gegenstand des Patentanspruchs 1 sowie auch durch den Gegenstand des Verfahrensanspruchs 9 gelöst.

Um nun einen solchen Fahrzeugsitz anzubieten, umfasst der hier vorgeschlagene Fahrzeugsitz erfindungsgemäß zumindest eine Einstelleinrichtung zum vollautomatischen Einstellen und/oder Begrenzen einer Sitzhöhe des Sitzteils und/oder eines Dämpfungsgrades eines zwischen dem Sitzteil und dem Sitzfuß angeordneten Dämpfungselements während einer Sitzbelastung des Sitzteils durch die Benutzer, wobei die Einstelleinrichtung zumindest ein einstellbares Betätigungsmittel umfasst, welches, insbesondere von selbst, eine Einstellmechanik der Einstelleinrichtung betätigt, sobald durch die Sitzbelastung des Sitzteils die Sitzhöhe einen durch das Betätigungsmittel vorgegeben Normhöhennutzungsbereich verlässt, sodass die Sitzhöhe, insbesondere selbst regulierend, allein durch die Einstelleinrichtung je nach Sitzbelastungskraft des Sitzteils wieder in den Normhöhennutzungsbereich vollautomatisch zurück verschoben wird.

Vor der Sitzbelegung ist die Sitzhöhe vorzugsweise auf einen Höhenwert einstellbar. Dieser Höhenwert liegt innerhalb des Normhöhennutzungsbereichs. Nach der Sitzbelegung und ohne äußere weitere Stoßbelastung verringert sich dieser Höhenwert auf einen Belegungshöhenwert. Der Höhenwert und/oder Belegungshöhenwert können einen Höhengrenzwert darstellen.

Der Normhöhennutzungsbereich ist vorzugsweise derjenige Höhenbereich der Sitzfläche relativ zu dem Sitzfuß, innerhalb dessen sich der Belegungshöhenwert aufhält. Der Belegungshöhenwert kann vorzugsweise den Normhöhennutzungsbereich nicht verlassen. Die Restfederwege sind solche Federwege ober- und unterhalb des Normhöhennutzungsbereichs welche, vorzugsweise, nur bei äußerer Stoßbelastung erreicht werden, jedoch verstellt sich die Sitzhöhe nach Abschluss dieser Stoßbelastung von selbst und sofort wieder in den Normhöhennutzungsbereich. Dies schließt die Grenzen des Normhöhennutzungsbereichs mit ein.

Auf ein aufwendiges Austauschen eines Dämpfungselements oder auf ein aufwendiges Neueinjustieren von entsprechenden gewünschten Sitzhöhen in Bezug auf einen bestimmten Benutzer kann daher vorliegend vollständig verzichtet werden, sodass ein Fahrzeugsitz bereitgestellt wird, welcher für alle möglichen Benutzer eine Nutzung innerhalb des Normhöhennutzungsbereichs ermöglicht.

Gemäß zumindest einer Ausführungsform umfasst der Fahrzeugsitz erfindungsgemäß ein Sitzteil zum Platznehmen eines Benutzers des Fahrzeugsitzes sowie zumindest einen Sitzfuß zur Montage des Fahrzeugsitzes auf einem Fahrzeugboden.

Darüber hinaus umfasst der erfindungsgemäße Fahrzeugsitz ein höhenverstellbares Verbindungsgestell, welches das Sitzteil mit dem Sitzfuß mechanisch miteinander verbindet, sodass das Sitzteil in Höhenrichtung gegenüber dem Sitzfuß bewegbar ist.

Erfindungsgemäß umfasst der Fahrzeugsitz zumindest eine Einstelleinrichtung zum vollautomatischen Einstellen und/oder Begrenzen einer Sitzhöhe des Sitzteils während einer Sitzbelastung des Sitzteils durch den Benutzer. Dabei umfasst die Einstelleinrichtung zumindest ein einstellbares Betätigungsmittel, welches von selbst eine Einstellmechanik der Einstelleinrichtung betätigt, sobald durch die Sitzbelastung des Sitzteils die Sitzhöhe einen, durch das Betätigungsmittel vorgegebenen Normhöhennutzungsbereich verlässt. Die Sitzhöhe wird dadurch vollautomatisch, insbesondere selbstregulierend allein durch die Einstelleinrichtung je nach Sitzbelastungsgrad des Sitzteils wieder in den Normhöhennutzungsbereich, zurückverschoben.

Gemäß zumindest einer Ausführungsform umfasst die hier beschriebene Einstelleinrichtung zumindest ein Ventilelement zum Be- oder Entlüften einer fluidischen Höhenverstelleinrichtung zum Einstellen, insbesondere zum Absenken eines Höhenabstandes zwischen dem Sitzteil und dem Sitzfuß. Eine "fluidische Höhenverstelleinrichtung" ist im Sinne der Erfindung eine solche Höhenverstelleinrichtung, deren Höhe mittels eines fluidischen Pumpkreislaufs einstellbar ist.

Darüber hinaus umfasst die Einstelleinrichtung in zumindest einer Ausführungsform zumindest ein Schalterelement zum Betätigen einer Fluidpumpe zur Vergrößerung des Höhenabstandes zwischen dem Sitzteil und dem Sitzfuß, wobei das Betätigungsmittel das Ventilelement dann betätigt, wenn eine obere Grenze des Normhöhenutzungsbereichs überschritten ist, und das Betätigungsmittel das Schalterelement dann betätigt, wenn eine untere Grenze des Normhöhenutzungsbereichs unterschritten ist.

Zum Beispiel kann daher der Normhöhennutzungsbereich in Höhenrichtung als Intervall zwischen zwei Grenzwerten definiert sein, wobei ein oberer Grenzwert einen solchen darstellt, welcher bei Überschreitung ein Betätigen der Ventileinrichtung verursacht, während bei Unterschreiten eines unteren Grenzwertes das Schalterelement betätigt wird.

Statt der oben beschriebenen Fluidpumpe kann auch ein Kompressor genutzt werden.

Gemäß zumindest einer Ausführungsform ist ein Hebelelement des Betätigungsmittels um eine Drehachse, welche vorzugsweise senkrecht zur Höhenrichtung verläuft, drehbeweglich angeordnet und insbesondere an dem Sitzfuß oder an dem Sitzteil drehbeweglich gelagert. So wird das Hebelelement des Betätigungselementes über eine Höhenbewegung des Sitzteils relativ zum Sitzfuß um diese Drehachse gedreht, sodass in einer ersten Drehstellung des Hebelelements dieses Hebelelement das Ventilelement betätigt und in einer zweiten Drehstellung des Hebelelements dieses Hebelelement das Schalterelement betätigt.

Zwischen diesen beiden Drehstellungen ist vorzugsweise ein Drehspielraum einer gewissen Gradzahl vorhanden. Innerhalb dieses Drehspielraums mag sich zwar das Hebelelement drehen, jedoch wird weder das Schalterelement noch das Ventilelement durch dieses Hebelelement betätigt. Innerhalb dieses Drehspielraums befindet sich daher die Sitzfläche vorzugsweise in dem Normhöhennutzungsbereich.

Gemäß zumindest einer Ausführungsform weist das höhenverstellbare Verbindungsgestell ein Scherengestell auf, welches zumindest zwei Scherenarme aufweist, die zwischen den Sitzteilen und dem Sitzfuß angeordnet sind. Vorzugsweise sind die beiden Scherenarme um eine Scherenarmdrehachse drehbar zueinander angeordnet. Diese Scherenarmdrehachse kann parallel zur Drehachse der Einstelleinrichtung verlaufen.

Gemäß zumindest einer Ausführungsform steht das Betätigungsmittel mittels eines Mitnehmers mit dem Höheneinstellelement zumindest mittelbar mechanisch in Eingriff, wobei der Mitnehmer derart ausgeführt und/oder an dem Sitzfuß und/oder an dem Sitzteil gelagert ist, dass erst nach Unter- und/oder Überschreiten des Höhengrenzwerts der Mitnehmer das Betätigungselement mechanisch bewegt, wobei innerhalb des Normhöhennutzungsbereichs zwischen dem Mitnehmer und dem Betätigungselement ein Leerlauf (= Hysterese) vorhanden und damit eingebaut ist. Während des Leerlaufs wird das Betätigungselement von dem Mitnehmer vorzugsweise nicht angetrieben. Die Grenzen des Leerlaufs können automatisch auch die Höhengrenzen des Normhöhennutzungsbereichs definieren.

Gemäß zumindest einer Ausführungsform weist die Einstelleinrichtung zumindest ein Rückstellelement, zum Beispiel eine Drehfeder auf, wobei die Drehfeder der Entkoppelung des Hebelelements vom Mitnehmer dient. Zum Beispiel ist das Hebelelement drehgelagert mit dem Pleuelelement verbunden, sodass es jede Bewegung des Pleuelelements auf die Einstelleinrichtung überträgt, sodass auch keine Rückstellung erforderlich ist.

In Verbindung mit der Kopplung zum Hebelelement kann damit eine Filterung von hochfrequenten Schwingungen (Tiefpass) implementiert sein. Das heißt, dass kurzfristige Positionsabweichungen während eines dynamischen Einsatzes der Federung gefiltert werden, wobei statische Höhenabweichungen weitergegeben werden. Vorzugsweise werden zumindest ein Teil, beispielsweise jede statische Höhenabweichung weitergegeben.

Gemäß zumindest einer Ausführungsform ist die Einstelleinrichtung frei von einer rein elektronischen Steuer- und/oder Regeleinrichtung, sodass eine Einstellung der Höhe des Sitzteils mechanisch erfolgt.

"Rein elektronische Steuer- und Regeleinrichtung" bezeichnet eine solche Steuerungs-und/oder Regeleinrichtung, welche ausschließlich aufgrund einer in diese Einrichtung softwaretechnisch implementierte Höhenregelung und/oder Höhensteuerung des Sitzteils relativ zum Sitzfuß erzeugt ist. Mit anderen Worten kann die hier beschriebene Einstelleinrichtung durchaus auch elektronische Schalterelemente, wie einen Taster oder sonstige Schalter zur Verschaltung aufweisen. Diese sind jedoch nicht, zumindest nicht nur, durch eine Steuerung und/oder Regelung eines entsprechenden Steuer- und/oder Regelchips verursacht.

Darüber hinaus umfasst die vorliegende Erfindung ein Verfahren zur, insbesondere vollautomatischen, Höheneinstellung eines Fahrzeugsitzes. Insbesondere kann das hier beschriebene Verfahren einen wie obig beschriebenen Fahrzeugsitz nutzen. Insofern sind alle vorgenannten den Fahrzeugsitz betreffenden Merkmale auch für das hier beschriebene Verfahren offenbart und umgekehrt.

Gemäß zumindest einer Ausführungsform umfasst das Verfahren zur, insbesondere vollautomatischen, Höheneinstellung des Fahrzeugsitzes zunächst einen wie obig beschriebenen Fahrzeugsitz mit einem Sitzteil zum Platznehmen eines Benutzers des Fahrzeugsitzes. Außerdem umfasst es zumindest einen Sitzfuß zur Montage des Fahrzeugsitzes auf einem Fahrzeugboden und des Weiteren ein höhenverstellbares Verbindungsgestell, welches das Sitzteil mit dem Sitzfuß mechanisch verbindet, sodass das Sitzteil in Höhenrichtung gegenüber dem Sitzfuß bewegbar ist.

Erfindungsgemäß umfasst das Verfahren daher die Verwendung zumindest einer Einstelleinrichtung zum vollautomatischen Einstellen und/oder Begrenzen einer Sitzhöhe des Sitzteils während einer Sitzbelastung des Sitzteils durch den Benutzer, wobei die Einstelleinrichtung zumindest ein einstellbares Betätigungsmittel umfasst, welches von selbst eine Einstellmechanik der Einstelleinrichtung betätigt sobald durch die Sitzbelastung des Sitzteils die Sitzhöhe einen durch das Betätigungsmittel vorgegebenen Normhöhennutzungsbereich verlässt, sodass die Sitzhöhe, insbesondere selbstregulierend, allein durch die Einstelleinrichtung je nach Sitzbelastungsgrad des Sitzteils wieder in den Normhöhennutzungsbereich vollautomatisch zurückverschoben wird.

Weitere Vorteile, Ziele und Eigenschaften der vorliegenden Erfindung werden anhand nachfolgender Beschreibung und anliegender Zeichnungen erläutert, in welchen beispielhaft in verschiedenen Ausführungsbeispielen ein hier beschriebener erfindungsgemäßer Fahrzeugsitz gezeigt ist.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig. 1: eine schematische Höhenprofilsteuerung zwischen verschiedenen Sitzhöhen eines Fahrers 1 und eines Fahrers 2;
- Fig. 2: eine weitere Höhenprofilsteuerung, bei der der Fahrzeugsitz jeweils an den Sitzhöhen A und B besetzt wird und vorzugsweise vollautomatisch zumindest auf die Sitzhöhe 0 zurückkehrt;
- Figs. 3A bis 3G: schematisch perspektivische Ansichten eines ersten Ausführungsbeispiels einer hier beschriebenen Einstellmechanik (welche in ihrem Grundschema bereits in den Figuren 1 gezeigt ist);
- Fig. 4: in einer schematisch perspektivischen Ansicht den hier beschriebenen erfindungsgemäßen Fahrzeugsitz mit dem daran ersichtlichen Scherengestell;
- Fig. 5: eine alternative Implementation der Ausführung der hier beschriebenen Einstellmechanik in jeweilig schematischen Seitenansichten;
- Fig. 6: einen elektrischen Grundschaltplan zur elektrofluidischen Implementation der Einstellmechanik in dem Fahrzeugsitz.

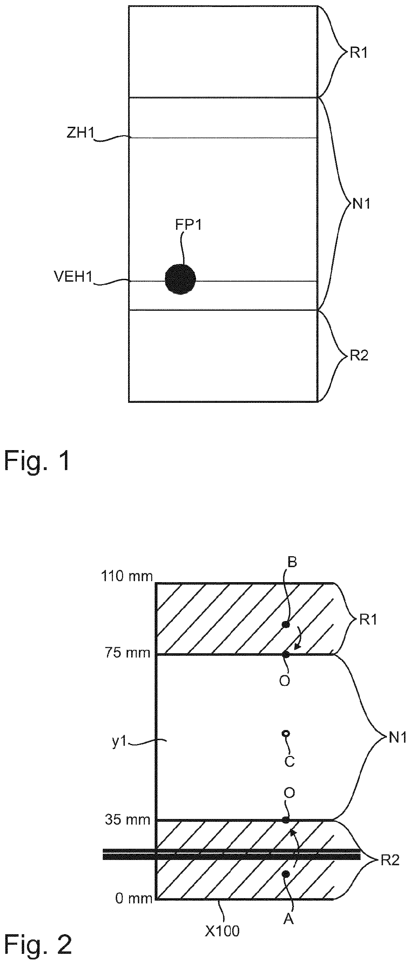

In der Figur 1 sind rein schematisch ein oberer Restfederweg R1 sowie ein unterer Restfederweg R2 angegeben. Der untere Restfederweg R2 ist ein solcher Federweg, welcher zum Beispiel von einer Federhöhe 0 mm bis 50 mm reicht, wobei der obere Restfederweg R1 vorliegend einen Federweg zwischen 130 und 180 mm aufweist. Dazwischen befindet sich ein Normhöhennutzungsbereich N1. Erkannt werden kann durch den eingezeichneten fetten Punkt FP1, dass eine für einen Fahrer vorher eingestellte Höhe VEH1 vorhanden ist, wobei ein anderer Fahrer mit unterschiedlichem Gewicht selbstverständlich eine andere Höhe wünscht. Hierzu besteht eine neue Zielhöhe ZH1 für den anderen Fahrer. Die vorliegende Zielhöhe ZH1 befindet sich in vorliegendem Ausführungsbeispiel jedoch im Normhöhennutzungsbereich N1, sodass die Einstellmechanik keine automatische Sitzhöhenverstellung vornimmt.

Eingestellt werden kann die Zielhöhe ZH1 jedoch über Betätigungsmittel 5, welche das Ventilelement 7 und/oder das Schalterelement 6 betätigen. Die Betätigungsmittel 5 können vom Benutzer betätigt werden.

In der Figur 2 ist die bereits obig mehrmals angesprochene vollautomatische Höhenverstellung bei unterschiedlicher Nutzungsbelegung des Sitzteils 110 gezeigt, wobei auf der y-Achse y1 der Federweg aufgebracht ist und auf der x-Achse x100 die Ausdehnung des Sitzteils 110, wobei in dem Bereich des unterer Restfederweg R2 bei einer Sitzbelegungsänderung, zum Beispiel durch einen anderen Besitzer, die Sitzhöhe S1 zwar zunächst auf die Position A absinkt, jedoch dann wieder sofort vollautomatisch zumindest auf die Sitzhöhe O automatisch aufgebaut wird. Die Sitzhöhe O kann sich vollautomatisch exakt auf eine untere Grenze des Normhöhennutzungsbereichs N1 einstellen. So ist vorstellbar, dass das Schaltelement 23 solange den Kompressor betätigt, bis von unten eine untere Grenze des Normnutzungsbereichs N1 erreicht ist.

Im oberen Falle, bei dem die Sitzhöhe sich zunächst auf eine Höhe B einstellt, ist der Fahrer zu leicht und die Einstellmechanik 22 der Einstelleinrichtung 20 sorgt automatisch dafür, dass sich die Sitzhöhe S1 zumindest auf die Höhe O, vorzugsweise exakt, ebenso wieder am Rande des Normhöhennutzungsbereichs N1 einstellt. So ist vorstellbar, dass das Ventilelement 7 solange die Höhenverstelleinrichtung entlüftet, bis von oben eine obere Grenze des Normnutzungsbereichs N1 erreicht ist.

Befindet sich nach einer Nutzungsbelegungsänderung die Sitzhöhe zunächst auf einer Sitzhöhe auf dem Punkt C, das heißt innerhalb des Normhöhennutzungsbereichs N1, ist die Einstelleinrichtung 20 nicht aktiv, sodass keine automatische Veränderung der Sitzhöhe von statten geht.

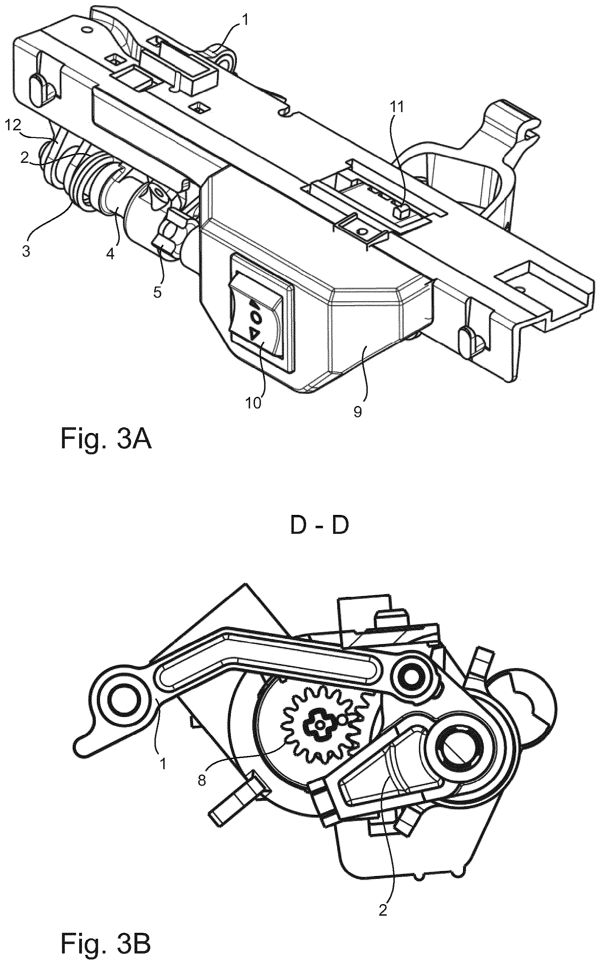

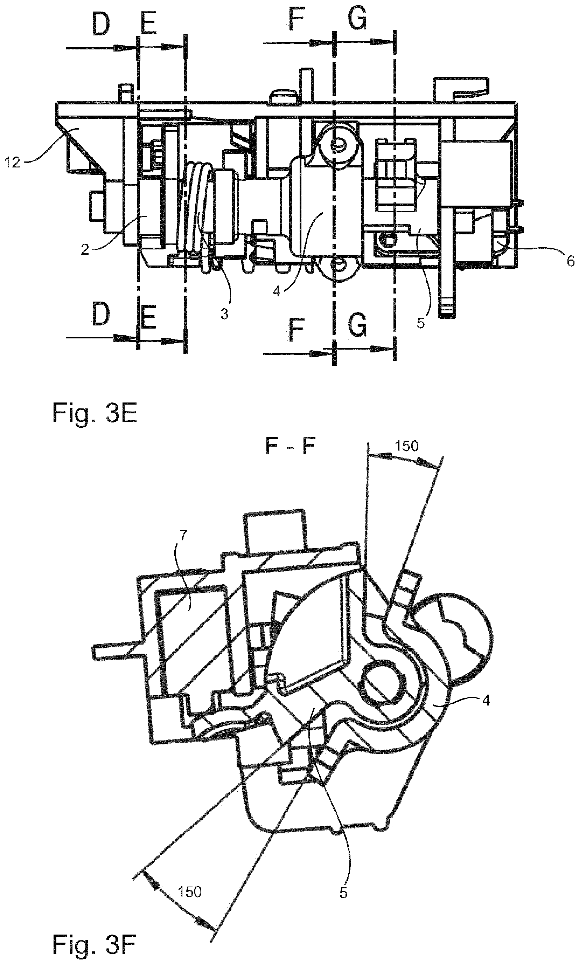

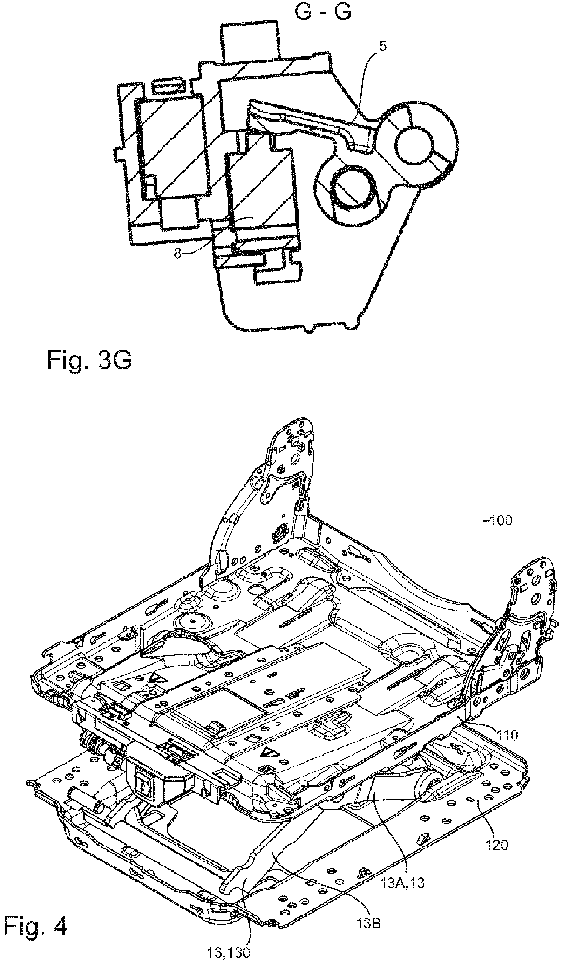

Die Figuren 3A und 3G zeigen schematisch perspektivisch eine Ausführungsform der beschriebenen Einstellmechanik 22. Dabei sind die Schnittlinien A-A, B-B usw. in der Figur 3E gezeigt.

In den beiden schematisch perspektivischen Ansichten der Figuren 3A und 3B ist ein Pleuelelement 1 dargestellt. Aufgrund einer Bewegung des Pleuelelements 1 wird die gesamte Einstellmechanik 22 in Gang gesetzt, wie dies schematisch auch in der Figur 1 gezeigt ist. Insbesondere kann das Pleuelelement 1 mit dem oben beschriebenen Höheneinstellelement 24 über das Seil verbunden sein. Ein freies Ende des Pleuelelements 1 kann mit einem Scherenarm 13A, 13B (siehe auch Figur 4), dem Sitzteil 110, und/oder dem Stitzfuß 11 befestigt sein.

Darüber hinaus ist das Hebelelement 220 erkennbar, welches die translatorische Bewegung des Pleuelelements 1 in eine rotatorische Bewegung umwandelt, wobei darüber hinaus das Rückstellelement 3 in Form der Drehfeder gezeigt ist, welche mit einem Mitnehmer 4 gekoppelt ist. Insbesondere ist nämlich das Betätigungsmittel 5 mittels eines Mitnehmers 4 mit dem Höheneinstellelement 24 zumindest mittelbar mechanisch in Eingriff gebracht, wobei der Mitnehmer 4 derart ausgeführt und/oder an dem Sitzfuß 120 und/oder am Sitzteil 110 gelagert ist, dass erst nach Unter- und/oder Überschreiten des Höhengrenzwerts H1 der Mitnehmer 4 das Betätigungselement 21 mechanisch bewegt, wobei innerhalb des Normhöhennutzungsbereichs N1 zwischen dem Mitnehmer 4 und dem Betätigungsmittel 5 ein Leerlauf (= Hysterese) vorhanden ist, wie dies in der Figur 3F durch den darstellten Hysteresewinkel 150 gezeigt ist.

Der Mitnehmer 4 leitet eine translatorische Bewegung des Hebelelements 220 weiter. Zudem ist das Hebelelement 220 mit einem Rotationsdämpfer 8 gekoppelt und damit in mechanischer Verbindung mit dem Hebel.

In Verbindung mit der Kopplung zum Hebelelement 2 kann eine Filterung von hochfrequenten Schwingungen (Tiefpass) implementiert sein. Das heißt, dass kurzfristige Positionsabweichungen während eines dynamischen Einsatzes der Federung gefiltert werden, wobei statische Höhenabweichungen weitergegeben werden. Vorzugsweise werden zumindest ein Teil, beispielsweise jede statische Höhenabweichung weitergegeben.

Des Weiteren ist aus der Figur 3B wiederrum das Hebelelement 2 erkennbar, sodass dieses je nach Stellung entweder das Ventilelement 7 oder aber das Schalterelement 6 (Höhenverstellung auf/ab) betätigt.

Insbesondere ist in der Figur 3F die oben genannte Hysterese zwischen dem Betätigungselement 21 und dem Mitnehmer 4 erkennbar (siehe insbesondere auch Figur 3F). Vorzugsweise findet somit im mittleren Bereich, das heißt in dem Normhöhennutzungsbereich N1 kein Nachkorrigieren der Höhe bzw. des Gewichts statt. Lediglich im Restfederweg R1, R2 erfolgt eine entsprechende Gewichtseinstellung.

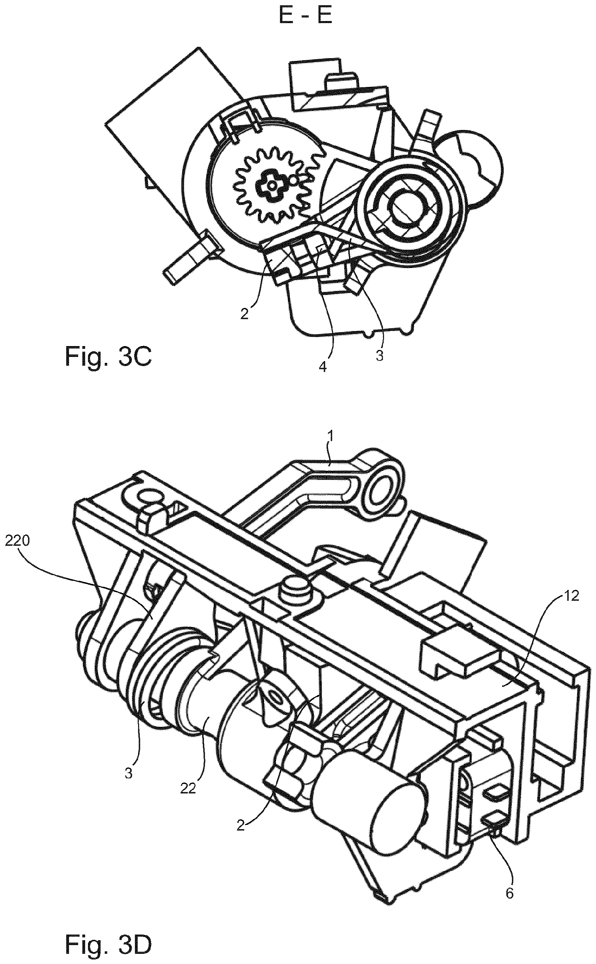

In den Figuren 3 sind des Weiteren ein Rotationsdämpfer 8, ein Gehäuse 9, ein Taster 10, eine Sitzbelegungserkennung 11, sowie ein Träger 12 erkennbar.

Die oben beschriebenen Elemente werden nochmals in den Schnittdarstellungen gemäß den Figuren 3C bis 3G gezeigt. Insbesondere ist zum Beispiel auch in der Figur 3F die Hysterese zwischen dem Mitnehmer 4 und dem Betätigungselement 21 erkennbar.

In der Figur 4 ist ein erfindungsgemäßer Fahrzeugsitz 100 mit einem höhenverstellbaren Scherengestell 130 gezeigt, wobei das Scherengestell 130 zwei Scherenarme 13A, 13B aufweist.

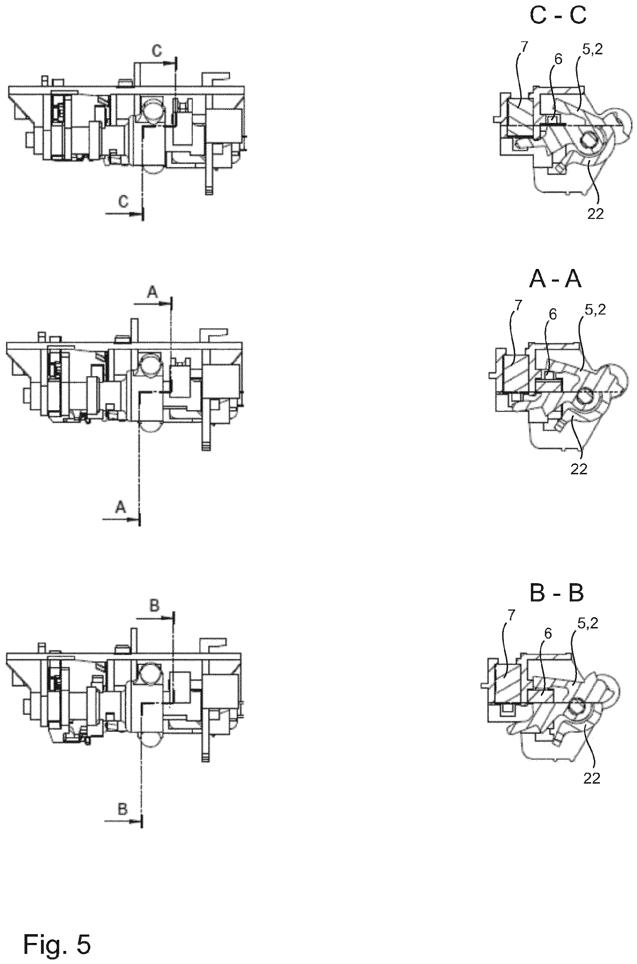

In der Figur 5 ist in einer alternativen Darstellung ein weiteres Ausführungsbeispiel einer hier beschriebenen Einstellmechanik 22 gezeigt, bei der statt der vorhandenen Hysterese vielmehr auf eine solche verzichtet ist, und somit der Mitnehmer 4 direkt mit dem Betätigungselement 21 mitrotiert. Erhalten ist jedoch wieder eine Hysterese.

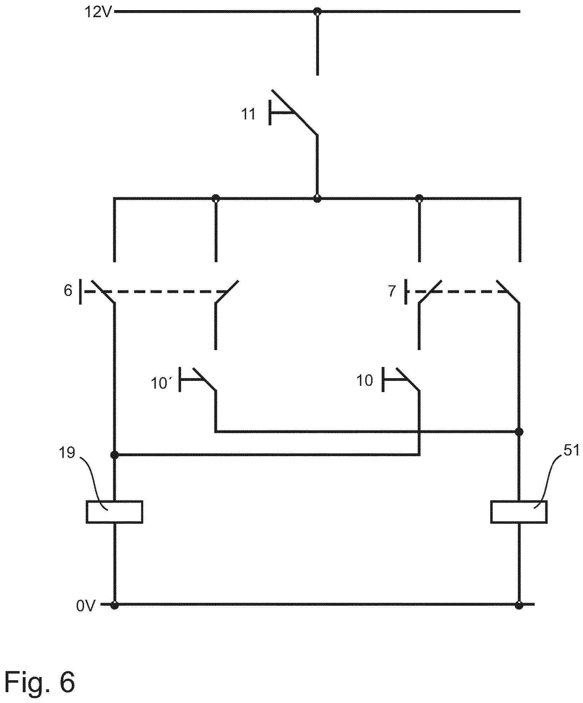

In der Figur 6 ist ein schematischer Schaltplan zur Verschaltung des Ventilelements 7 und des Schalterelements 6 gezeigt.

Insbesondere ist dort der Kompressor zur Zuleitung vom Zulüftungseindämpfungselement, welches zwischen dem Sitzteil 110 und dem Sitzfuß 120 eingebaut ist, gezeigt, sowie ein Abluftventil 51, welches nach einer Schalterbetätigung aktiv wird. Erkennbar sind wiederum das Ventilelement 7 sowie das Schalterelement 6 und auch die Sitzbelegungserkennung 11.

### Bezugszeichenliste

- 1: Pleuelelement
- 2: Hebelelement
- 3: Rückstellelement
- 4: Mitnehmer
- 5: Betätigungsmittel
- 6: Schalterelement
- 7: Ventilelement
- 8: Rotationsdämpfer
- 9: Gehäuse
- 10: Taster "auf"
- 10': Taster "ab"
- 11: Sitzbelegungserkennung
- 12: Träger
- 13: Verbindungsgestell
- 13A: Scherenarm
- 13B: Scherenarm
- 19: Fluidkompressor
- 20: Einstelleinrichtung
- 22: Einstellmechanik
- 24: Höheneinstellelement
- 51: Abluftventil
- 100: Fahrzeugsitz
- 110: Sitzteil
- 120: Sitzfuß
- 130: Scherengestell
- 150: Hysteresewinkel
- 210A: erster Hebelarm
- 210B: zweiter Hebelarm
- 210C: dritter Hebelarm
- 220: Hebelelement
- 240: Federelement
- H1: Höhengrenzwert
- N1: Normhöhennutzungsbereich
- R1: oberer Restfederweg
- R2: unterer Restfederweg
- S1: Sitzhöhe
- VEH1: voreingestellte Höhe
- X1: Drehachse
- ZH1: Zielhöhe

## Patentansprüche

1. Fahrzeugsitz (100), mit
- einem Sitzteil (110) zum Platznehmen eines Benutzers des Fahrzeugsitzes (100),
- zumindest einem Sitzfuß (120) zur Montage des Fahrzeugsitzes (100) auf einem Fahrzeugboden,
- einem höhenverstellbaren Verbindungsgestell (13), welches das Sitzteil (110) mit dem Sitzfuß (120) mechanisch miteinander verbindet, sodass das Sitzteil (110) in Höhenrichtung gegenüber dem Sitzfuß (120) bewegbar ist,
wobei zumindest eine Einstelleinrichtung (20) zum vollautomatischen Einstellen und/oder Begrenzen einer Sitzhöhe (S1) des Sitzteils (110) während einer Sitzbelastung des Sitzteils (110) durch den Benutzer vorhanden ist,
wobei die Einstelleinrichtung (20) zumindest ein einstellbares Betätigungsmittel (5) umfasst, welches von selbst eine Einstellmechanik (22) der Einstelleinrichtung (20) betätigt, sobald durch die Sitzbelastung des Sitzteils (110) die Sitzhöhe (S1) einen durch das Betätigungsmittel (5) vorgegebenen Normhöhennutzungsbereich (N1) verlässt, sodass die Sitzhöhe (S1), insbesondere selbstregulierend, allein durch die Einstelleinrichtung (20) je nach Sitzbelastungsgrad des Sitzteils (110) wieder in den Normhöhennutzungsbereich (N1) vollautomatisch zurückverschoben wird.

2. Fahrzeugsitz (100) nach Anspruch 1,
**dadurch gekennzeichnet, dass**
die Einstelleinrichtung (20)
- zumindest ein Ventilelement (7) zum Be- oder Entlüften einer fluidischen Höhenverstelleinrichtung zum Einstellen, insbesondere zum Absenken, eines Höhenabstandes zwischen dem Sitzteil (110) und dem Sitzfuß (120), und
- zumindest ein Schalterelement (6) zum Betätigen einer Fluidpumpe zur Vergrößerung des Höhenabstandes zwischen dem Sitzteil (110) und dem Sitzfuß (120) aufweist, wobei
das Betätigungsmittel (25) das Ventilelement (7) dann betätigt, wenn die eine obere Grenze des Normhöhennutzungsbereichs (N1) überschritten ist, und das Betätigungsmittel (5) das Schalterelement (6) dann betätigt, wenn eine untere Grenze des Normhöhennutzungsbereichs (N1) unterschritten ist.

3. Fahrzeugsitz (100) nach Anspruch 2,
**dadurch gekennzeichnet, dass**
ein Hebelelement (2) des Betätigungsmittels (5) um eine Drehachse (X1), welche vorzugsweise senkrecht zur Höhenrichtung verläuft, drehbeweglich, insbesondere an dem Sitzfuß (120) oder an dem Sitzteil (110), gelagert ist, sodass über eine Höhenbewegung des Sitzteils (110) relativ zum Sitzfuß (120) das Hebelelement (2) des Betätigungselements (21) um diese Drehachse (X1) gedreht wird, sodass in einer ersten Drehstellung des Hebelelements (2) dieses Hebelelement (2) das Ventilelement (7) betätigt und in einer zweiten Drehstellung des Hebelelements (2) dieses Hebelelement (2) das Schalterelement (6) betätigt.

4. Fahrzeugsitz (100) nach zumindest einem der vorhergehenden Ansprüche,
**dadurch gekennzeichnet, dass**
das höhenverstellbare Verbindungsgestell (13) ein Scherengestell (130) aufweist, welches zumindest zwei Scherenarme (13A, 13B) umfasst, die zwischen dem Sitzteil (110) und dem Sitzfuß (120) angeordnet sind.

5. Fahrzeugsitz (100) nach Anspruch 4,
**dadurch gekennzeichnet, dass**
das Betätigungsmittel (5) mittels eines Mitnehmers (4) mit dem Höheneinstellelement (24) zumindest mittelbar mechanisch in Eingriff steht, wobei der Mitnehmer (4) derart ausgeführt und/oder an dem Sitzfuß (120) und/oder dem Sitzteil (110) gelagert ist, dass erst nach Verlassen des Normhöhennutzungsbereichs der Mitnehmer (4) das Betätigungselement (21) mechanisch bewegt, wobei innerhalb des Normhöhennutzungsbereichs (N1) zwischen dem Mitnehmer (4) und dem Betätigungsmittel (5) ein Leerlauf (Hysterese) vorhanden ist.

6. Fahrzeugsitz (100) nach Anspruch 5,
**dadurch gekennzeichnet, dass**
die Einstelleinrichtung (20) zumindest ein Rückstellelement (3), zum Beispiel eine Drehfeder, aufweist, wobei die Drehfeder (3) der Entkoppelung des Hebelelements (2) vom Mitnehmer (4) dient.

7. Fahrzeugsitz (100) nach zumindest einem der vorhergehenden Ansprüche,
**dadurch gekennzeichnet, dass**
die Einstelleinrichtung (20) frei von einer rein elektronischen Steuer- und/oder Regeleinrichtung ist, sodass eine Einstellung mechanisch erfolgt.

8. Verfahren zur, insbesondere vollautomatischen, Höheneinstellung eines Fahrzeugsitzes (100), mit
- einem Sitzteil (110) zum Platznehmen eines Benutzers des Fahrzeugsitzes (100),
- zumindest einem Sitzfuß (120) zur Montage des Fahrzeugsitzes (100) auf einem Fahrzeugboden,
- einem höhenverstellbaren Verbindungsgestell (13), welches das Sitzteil (110) mit dem Sitzfuß (120) mechanisch miteinander verbindet, sodass das Sitzteil (110) in Höhenrichtung gegenüber dem Sitzfuß (120) bewegbar ist,
wobei zumindest eine Einstelleinrichtung (20) zum vollautomatischen Einstellen und/oder Begrenzen einer Sitzhöhe (S1) des Sitzteils (110) während einer Sitzbelastung des Sitzteils (110) durch den Benutzer vorhanden ist,
wobei die Einstelleinrichtung (20) zumindest ein einstellbares Betätigungsmittel (5) umfasst, welches von selbst eine Einstellmechanik (22) der Einstelleinrichtung (20) betätigt sobald durch die Sitzbelastung des Sitzteils (110) die Sitzhöhe (S1) einen durch das Betätigungsmittel (5) vorgegebenen Normhöhennutzungsbereich (N1) verlässt, sodass die Sitzhöhe (S1), insbesondere selbstregulierend, allein durch die Einstelleinrichtung (20) je nach Sitzbelastungsgrad des Sitzteils (110) wieder in den Normhöhennutzungsbereich (N1) vollautomatisch zurückverschoben wird.

## Claims

1. Vehicle seat (100), having
- a seat part (110) for seating of a user of the vehicle seat (100),
- at least one seat base (120) for mounting the vehicle seat (100) on a vehicle floor,
- an adjustable-height connecting frame (13) which connects the seat part (110) to the seat base (120) mechanically, with the result that the seat part (110) can be moved in the vertical direction with respect to the seat base (120),
wherein
at least one setting device (20) for fully automatically setting and/or limiting a seat height (S1) of the seat part (110) during seat loading of the seat part (110) by way of the user is present, the setting device (20) comprising at least one adjustable actuating means (5) which by itself actuates a setting mechanism (22) of the setting device (20) as soon as the seat height (S1) departs from a standard height use range (N1) which is predefined by way of the actuating means (5) as a result of the seat loading of the seat part (110), with the result that the seat part (S1) is displaced back into the standard height use range (N1) again in a fully automatic manner, in particular in a self-regulating manner, solely by way of the setting device (20) depending on the degree of seat loading of the seat part (110).

2. Vehicle seat (100) according to claim 1,
**characterized in that**
the setting device (20)
- has at least one valve element (7) for filling or emptying a fluidic height adjustment device for setting, in particular for lowering, a vertical spacing between the seat part (110) and the seat base (120), and
- at least one switch element (6) for actuating a fluid pump for increasing the vertical spacing between the seat part (110) and the seat base (120),
the actuating means (25) actuating the valve element (7) when the one upper limit of the standard height use range (N1) is exceeded, and the actuating means (5) actuating the switch element (6) when a lower limit of the standard height use range (N1) is undershot.

3. Vehicle seat (100) according to claim 2,
**characterized in that**
a lever element (2) of the actuating means (5) is mounted, in particular on the seat base (120) or on the seat part (110), such that it can be moved rotationally about a rotational axis (X1) which preferably runs perpendicularly with respect to the vertical direction, with the result that the lever element (2) of the actuating element (21) is rotated about the said rotational axis (X1) via a vertical movement of the seat part (110) relative to the seat base (120), with the result that, in a first rotational position of the lever element (2), the said lever element (2) actuates the valve element (7) and, in a second rotational position of the lever element (2), the said lever element (2) actuates the switch element (6).

4. Vehicle seat (100) according to at least one of the preceding claims,
**characterized in that**
the adjustable-height connecting frame (13) has a scissor frame (130) which comprises at least two scissor arms (13A, 13B) which are arranged between the seat part (110) and the seat base (120).

5. Vehicle seat (100) according to claim 4,
**characterized in that**
the actuating means (5) is at least indirectly in engagement mechanically with the height setting element (24) by means of a driver (4), the driver (4) being configured and/or mounted on the seat base (120) and/or the seat part (110) in such a way that the driver (4) moves the actuating element (21) mechanically only after the standard height use range is departed from, there being an idling state (hysteresis) within the standard height use range (N1) between the driver (4) and the actuating means (5).

6. Vehicle seat (100) according to claim 5,
**characterized in that**
the setting device (20) has at least one restoring element (3), for example a torsion spring, the torsion spring (3) serving to decouple the lever element (2) from the driver (4).

7. Vehicle seat (100) according to at least one of the preceding claims,
**characterized in that**
the setting device (20) is free of a purely electronic control and/or regulating device, with the result that setting takes place mechanically.

8. Method for setting the height, in particular in a fully automatic manner, of a vehicle seat (100), having
- a seat part (110) for seating a user of the vehicle seat (100),
- at least one seat base (120) for mounting the vehicle seat (100) on a vehicle floor,
- an adjustable-height connecting frame (13) which connects the seat part (110) to the seat base (120) mechanically, with the result that the seat part (110) can be moved in the vertical direction with respect to the seat base (120),
wherein
at least one setting device (20) for setting and/or limiting a seat height (S1) of the seat part (110) in a fully automatic manner during seat loading of the seat part (110) by way of the user is present, the setting device (20) comprising at least one adjustable actuating means (5) which by itself actuates a setting mechanism (22) of the setting device (20) as soon as the seat height (S1) departs from a standard height use range (N1) which is predefined by way of the actuating means (5) as a result of the seat loading of the seat part (110), with the result that the seat height (S1) is displaced back into the standard height use range (N1) again in a fully automatic manner, in particular in a self-regulating manner, solely by way of the setting device (20) depending on the degree of seat loading of the seat part (110).

## Revendications

1. Siège de véhicule (100), avec
- une partie assise (110) pour asseoir un utilisateur du siège de véhicule (100) ;
- au moins un pied de siège (120) pour monter le siège de véhicule (100) sur un plancher de véhicule ;
- un châssis de liaison (13) réglable en hauteur, lequel relie mécaniquement l'un à l'autre la partie assise (110) avec le pied de siège (120), de telle sorte que la partie assise (110) est déplaçable dans la direction de la hauteur par rapport au pied de siège (120),
au moins un dispositif de réglage (20) pour le réglage entièrement automatique et/ou la limitation entièrement automatique d'une hauteur d'assise (S1) de la partie assise (110) pendant une charge d'assise de la partie assise (110) par l'utilisateur étant prévu,
le dispositif de réglage (20) comportant au moins un moyen d'actionnement réglable (5), lequel actionne par lui-même un mécanisme de réglage (22) du dispositif de réglage (20), dès que la hauteur d'assise (S1) sort d'une plage d'utilisation de hauteur standard (N1) prédéfinie par le moyen d'actionnement (5) sous l'effet de la charge d'assise de la partie assise (110), de telle sorte que la hauteur d'assise (S1) est ramenée de manière entièrement automatique à nouveau dans la plage d'utilisation de hauteur standard (N1), en particulier de manière autorégulée, uniquement par le dispositif de réglage (20) à chaque fois en fonction du degré de charge d'assise de la partie assise (110).

2. Siège de véhicule (100) selon la revendication 1,
**caractérisé par le fait que**
le dispositif de réglage (20) présente :
- au moins un élément soupape (7) pour la ventilation ou la purge d'un dispositif fluidique de réglage en hauteur pour régler, en particulier pour diminuer, une distance en hauteur entre la partie assise (110) et le pied de siège (120) ; et
- au moins un élément de commutation (6) pour actionner une pompe à fluide afin d'augmenter la distance en hauteur entre la partie assise (110) et le pied de siège (120),
le moyen d'actionnement (25) actionnant alors l'élément soupape (7) lorsqu'une limite supérieure de la plage d'utilisation de hauteur standard (N1) est dépassée, et le moyen d'actionnement (5) actionnant alors l'élément de commutation (6) lorsqu'une limite inférieure de la plage d'utilisation de hauteur standard (N1) n'est pas atteinte.

3. Siège de véhicule (100) selon la revendication 2,
**caractérisé par le fait qu'**
un élément levier (2) du moyen d'actionnement (5) est monté mobile en rotation autour d'un axe de rotation (X1), lequel s'étend de préférence perpendiculairement à la direction de la hauteur, en particulier sur le pied de siège (120) ou sur la partie assise (110), de telle sorte que, par un mouvement en hauteur de la partie assise (110) par rapport au pied de siège (120), l'élément levier (2) de l'élément d'actionnement (21) tourne autour de cet axe de rotation (X1), de sorte que, dans une première position en rotation de l'élément levier (2), cet élément levier (2) actionne l'élément soupape (7) et, dans une deuxième position en rotation de l'élément levier (2), cet élément levier (2) actionne l'élément de commutation (6).

4. Siège de véhicule (100) selon au moins l'une des revendications précédentes,
**caractérisé par le fait que**
le châssis de liaison (13) réglable en hauteur présente un châssis en ciseaux (130), lequel comporte au moins deux bras de ciseaux (13A, 13B) qui sont disposés entre la partie assise (110) et le pied de siège (120).

5. Siège de véhicule (100) selon la revendication 4,
**caractérisé par le fait que**
le moyen d'actionnement (5) est en prise mécanique au moins indirectement avec l'élément de réglage en hauteur (24) au moyen d'un organe d'entraînement (4), l'organe d'entraînement (4) étant réalisé et/ou étant monté sur le pied de siège (120) et/ou sur la partie assise (110) de telle sorte que ce n'est qu'après être sorti de la zone d'utilisation de hauteur standard que l'organe d'entraînement (4) déplace mécaniquement l'élément d'actionnement (21), une marche à vide (hystérésis) existant entre l'organe d'entraînement (4) et le moyen d'actionnement (5) à l'intérieur de la zone d'utilisation de hauteur standard (N1).

6. Siège de véhicule (100) selon la revendication 5,
**caractérisé par le fait que**
le dispositif de réglage (20) présente au moins un élément de rappel (3), par exemple un ressort de torsion, le ressort de torsion (3) servant à désaccoupler l'élément levier (2) de l'organe d'entraînement (4).

7. Siège de véhicule (100) selon au moins l'une des revendications précédentes,
**caractérisé par le fait que**
le dispositif de réglage (20) est exempt d'un dispositif de commande et/ou de régulation purement électronique, de sorte qu'un réglage a lieu mécaniquement.

8. Procédé de réglage en hauteur, en particulier entièrement automatique, d'un siège de véhicule (100), avec
- une partie assise (110) pour asseoir un utilisateur du siège de véhicule (100) ;
- au moins un pied de siège (120) pour monter le siège de véhicule (100) sur un plancher de véhicule ;
- un châssis de liaison (13) réglable en hauteur, lequel relie mécaniquement la partie assise (110) avec le pied de siège (120), de telle sorte que la partie assise (110) est déplaçable dans la direction de la hauteur par rapport au pied de siège (120),
au moins un dispositif de réglage (20) pour le réglage entièrement automatique et/ou la limitation entièrement automatique d'une hauteur d'assise (S1) de la partie assise (110) pendant une charge d'assise de la partie assise (110) par l'utilisateur étant prévu,
le dispositif de réglage (20) comportant au moins un moyen d'actionnement réglable (5), lequel actionne par lui-même un mécanisme de réglage (22) du dispositif de réglage (20) dès que la hauteur d'assise (S1) sort d'une plage d'utilisation de hauteur standard (N1) prédéfinie par le moyen d'actionnement (5) sous l'effet de la charge d'assise de la partie assise (110), de telle sorte que la hauteur d'assise (S1) est ramenée de manière entièrement automatique à nouveau dans la plage d'utilisation de hauteur standard (N1), en particulier de manière autorégulée, uniquement par le dispositif de réglage (20) à chaque fois en fonction du degré de charge d'assise de la partie assise (110).
